# EUROPEAN PATENT APPLICATION

(11) **EP 2 752 809 A1**
(43) Date of publication of application: **09.07.2014**
(21) Application number: 12832486.0
(22) Date of filing: 14.09.2012
(51) Int. Cl.: G06Q 50/06, H02J 3/00, H02J 13/00

(54) **POWER INFORMATION MANAGEMENT SYSTEM, POWER INFORMATION MANAGEMENT DEVICE, AND PROGRAM**

(30) Priority: 16.09.2011 JP 2011203017
(71) Applicant: Mitsubishi Heavy Industries, Ltd., Tokyo 108-8215 (JP)
(72) Inventor: ONO, Hidekazu, Tokyo 108-8215 (JP); ISHII, Shinya, Tokyo 108-8215 (JP); OWARI, Nobuyuki, Tokyo 108-8215 (JP); ADACHI, Tetsuya, Tokyo 108-8215 (JP)
(74) Representative: Henkel, Breuer & Partner
(86) International application number: PCT/JP2012/073642
(87) International publication number: WO 2013/039208

(57) **Abstract**

This power information management system is provided with a power information management device for managing information concerning power received by a consumer. The power information management device comprises the following: a power attribute evaluation unit for evaluating the attributes of the power received by the consumer; and a cumulative attribute information storage unit for cumulatively storing the evaluated power attribute information each time the power attribute evaluation unit evaluates power attributes.

## Description

### [Technical Field]

The present invention relates to a power information management system which manages information of power, a power information management device which manages information of power received by a consumer, and a program for the power information management device.

Priority is claimed on Japanese Patent Application No. 2011-203017, filed September 16, 2011, the content of which is incorporated herein by reference.

### [Background Art]

Recently, a word smart has been frequently used, for example, in smart grids, smart meters and smart communities. Looking at the future of power networks that are social infrastructure systems in the real world, although star type structures from a large power station to a factory, an office or a residence are currently being used, decentralization, bidirectivity and individualization are expected to progress with the advancement and development of wind power generation, solar cells, fuel cells, and storage batteries, and policies for prevention of global warming in support thereof.

Research and development described in Non-Patent Literature 1 proposes an idea called informationization of energy for the purpose of building of a new social ultra-distributed energy infrastructure based on unification of a power network and an information network. More specifically, the research and development described in Non-Patent Literature 1 propose performing energy management considering not only quantitative energy saving but also reduction of a carbon dioxide generation amount by distinguishing power from each power supply when a plurality of power sources are installed in a residence.

### [Citation List]

### [Non-Patent Literature]

[Non-Patent Literature 1] Takashi Matsuyama: "<Research and Trend of University> Informationization of Energy: Unification of Power Network and Information Network," Cue: Electricity-related Classroom Technology and Information Journal of Kyoto University, Electricity-related Classroom and Rakuyukai of Kyoto University, March 2010, No. 23, p. 3-8

### [Summary of Invention]

### [Technical Problem]

According to the research and development described in Non-Patent Literature 1, since information on a power source is affixed to power from each power source and the power is supplied, various types of energy management based on a difference between power sources are considered to be realizable by referring to the information.

However, the research and development described in Non-Patent Literature 1 do not propose a mechanism which accumulatively manages information of power received by a consumer.

### [Solution to Problem]

A power information management system of the present invention includes a power information management device which manages information of power received by a consumer, and the power information management device includes: a power attribute evaluation unit which evaluates an attribute of the power received by the consumer; and an accumulative attribute information storage unit in which attribute information of the evaluated power is accumulatively stored each time the power attribute evaluation unit evaluates the attribute of the power.

The power information management system of the present invention may further include a power information accumulation device which accumulates information of power received by a plurality of consumers, and the power information accumulation device may include an attribute information accumulation unit which accumulates attribute information of the power received by the consumers; and a statistics calculation unit which calculates statistics of attributes of power received by a plurality of consumers in a predetermined area based on the attribute information accumulated by the attribute information accumulation unit.

The power information accumulation device may further include an incentive calculation unit which calculates an incentive to be given to the consumer based on the attribute information accumulated by the attribute information accumulation unit.

The power information accumulation device may further include a penalty calculation unit which calculates a penalty to be given to the consumer based on the attribute information accumulated by the attribute information accumulation unit.

A power information management device of the present invention is a power information management device which manages information of power received by a consumer, and the power information management device includes: a power attribute evaluation unit which evaluates an attribute of the power received by the consumer; and an accumulative attribute information storage unit in which attribute information of the evaluated power is accumulatively stored each time the power attribute evaluation unit evaluates the attribute of the power.

A program of the present invention is a program for a power information management device which manages information of power received by a consumer, and causes the power information management device to function as: a power attribute evaluation unit which evaluates an attribute of the power received by the consumer; and an accumulative attribute information storage unit in which attribute information of the evaluated power is accumulatively stored each time the power attribute evaluation unit evaluates the attribute of the power.

In the summary of the invention described above, not all of the necessary characteristics of the present invention are listed, but sub-combinations of the characteristic groups may also be realized as the invention.

### [Advantageous Effects of Invention]

With the present invention, it is possible to accumulatively manage the information of the power received by the consumer, as is apparent from the above description.

### [Brief Description of Drawings]

Fig. 1 is a diagram illustrating an example of a use environment of a power information management system 100.
Fig. 2 is a diagram illustrating an example of a block configuration of a power information management device 110a.
Fig. 3 is a diagram illustrating an example of information stored in an accumulative attribute information storage unit 115 in a table form.
Fig. 4 is a diagram illustrating an example of a block configuration of a power information management device 130a.
Fig. 5 is a diagram illustrating an example of information stored in an accumulative attribute information storage unit 135 in a table form.
Fig. 6 is a diagram illustrating an example of a block configuration of a power information management device 150a.
Fig. 7 is a diagram illustrating an example of information stored in an accumulative attribute information storage unit 155 in a table form.
Fig. 8 is a diagram illustrating an example of a block configuration of a power information accumulation device 170.
Fig. 9 is a diagram illustrating an example of information stored in a consumer information storage unit 177 in a table form.
Fig. 10 is a diagram illustrating an example of information stored in an accumulative attribute information storage unit 178 in a table form.
Fig. 11 is a diagram illustrating another example of information stored in the accumulative attribute information storage unit 178 in a table form.
Fig. 12 is a diagram illustrating another example of information stored in the accumulative attribute information storage unit 178 in a table form.
Fig. 13 is a diagram illustrating an example of information stored in a statistics information storage unit 179 in a table form.
Fig. 14 is a diagram illustrating an example of information stored in an incentive information storage unit 180 in a table form.
Fig. 15 is a diagram illustrating an example of information stored in a penalty information storage unit 181 in a table form.
Fig. 16 is a diagram illustrating an example of an operation sequence of a power information management device 130 and the power information accumulation device 170.
Fig. 17 is a diagram illustrating an example of an operation sequence of a power information management device 150 and the power information accumulation device 170.
Fig. 18 is a diagram illustrating an example of an operation sequence of the power information management device 110, the power information management device 130 and the power information accumulation device 170.
Fig. 19 is a diagram illustrating an example of an operation sequence of the power information management device 110, the power information management device 130 and the power information accumulation device 170.
Fig. 20 is a diagram illustrating an example of an operation sequence of the power information management device 110, a power information management device 150 and the power information accumulation device 170.
Fig. 21 is a diagram illustrating an example of an operation sequence of the power information management device 110, the power information management device 150 and the power information accumulation device 170.
Fig. 22 is a diagram illustrating an example of an operation flow of the power information accumulation device 170.

### [Description of Embodiments]

Hereinafter, the present invention will be described through embodiments of the invention. Meanwhile, the following embodiments do not limit inventions according to the claims and all combinations of characteristics described in the embodiments may not be essential to a solution of the invention.

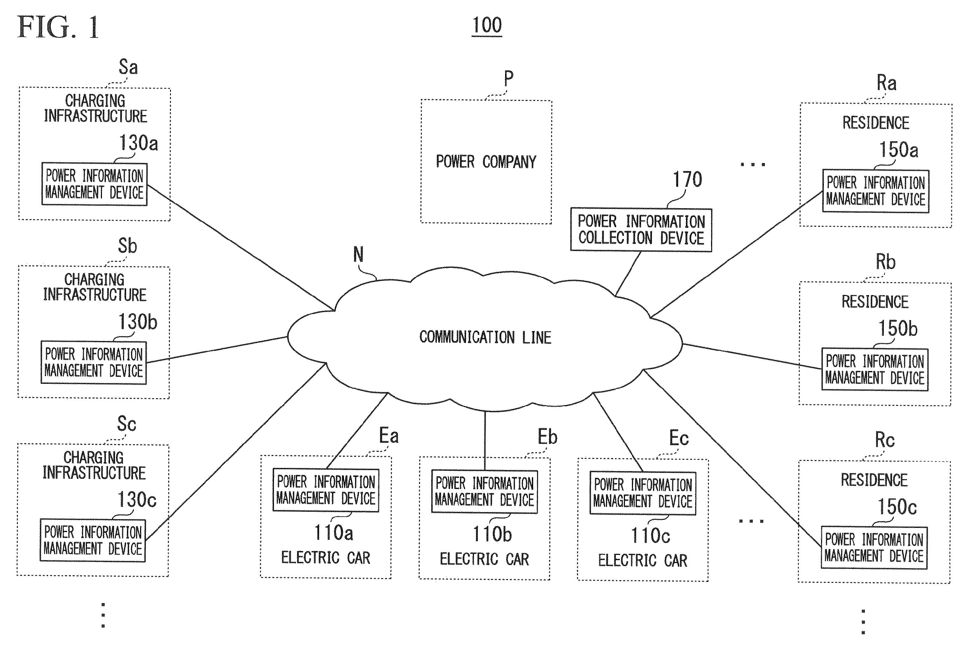

Fig. 1 illustrates an example of a use environment of a power information management system 100. The power information management system 100 is a system which manages information of power. More specifically, in the power information management system 100, a power system in which power generated by various power generation schemes in a power company P is supplied to a plurality of charging infrastructures Sa, Sb, Sc, ... (hereinafter collectively referred to as a charging infrastructure S) or a plurality of residences Ra, Rb, Rc, ... (hereinafter collectively referred to as a residence R) is assumed. Further, in the power information management system 100, a power system in which power generated in the charging infrastructure S or the residence R is also supplied is assumed. Further, in the power information management system 100, a power system in which an electric car E is charged with power received by the charging infrastructure S or the residence R is assumed. Further, the electric car E, the charging infrastructure S and the residence R may be an example of a "consumer" in the present invention. Further, a power generation scheme may be an example of an "attribute" in the present invention.

The power information management system 100 includes a plurality of power information management devices 110a, 110b, 110c, ... (hereinafter collectively referred to as a power information management device 110), a plurality of power information management devices 130a, 130b, 130c, ... (hereinafter collectively referred to as a power information management device 130), a plurality of power information management devices 150a, 150b, 150c, ... (hereinafter collectively referred to as a power information management device 150), and a power information accumulation device 170.

The power information management device 110 is a device which manages information of power received by the electric car E. More specifically, the power information management device 110 is provided in the electric car E. Also, the power information management device 110 is electrically connected to an electricity meter which measures a power reception amount of the electric car E. Further, the power information management device 110 is communicatively connected to the power information management device 130 or the power information management device 150 by short distance wireless communication. Further, the power information management device 110 is communicatively connected to the power information accumulation device 170 via a communication line N. Here, the communication line N includes a computer network such as the Internet, a core network of a communication carrier, and various local networks.

The power information management device 130 is a device which manages information of power received by the charging infrastructure S. More specifically, the power information management device 130 is provided in the charging infrastructure S. Also, the power information management device 130 is electrically connected to a smart meter which detects an attribute of the power received by the charging infrastructure S and measures a power reception amount. Further, the power information management device 130 is electrically connected to an input device for inputting attribute data indicating attribute information of power supplied to the electric car E in the charging infrastructure S. Further, the power information management device 130 is communicatively connected to the power information management device 110 by short distance wireless communication. Further, the power information management device 130 is communicatively connected to the power information accumulation device 170 via the communication line N.

The power information management device 150 is a device which manages information of power received by the residence R. More specifically, the power information management device 150 is provided in the residence R. Also, the power information management device 150 is electrically connected to the smart meter which detects an attribute of the power received by the residence R and measures a power reception amount. Further, the power information management device 150 is electrically connected to an input device for inputting attribute data indicating attribute information of power supplied to the electric car E in the residence R. Further, the power information management device 150 is communicatively connected to the power information management device 110 by the short distance wireless communication. Further, the power information management device 150 is communicatively connected to the power information accumulation device 170 via the communication line N.

The power information accumulation device 170 is a device which accumulates information of the power received by the electric car E, the charging infrastructure S and the residence R. More specifically, the power information accumulation device 170 is communicatively connected to the power information management device 110, the power information management device 130 and the power information management device 150 via the communication line N.

In the present embodiment, a configuration in which the power information management system 100 includes one power information accumulation device 170 will be described for the purpose of preventing complication of the description. However, the power information management system 100 may include a plurality of power information accumulation devices 170.

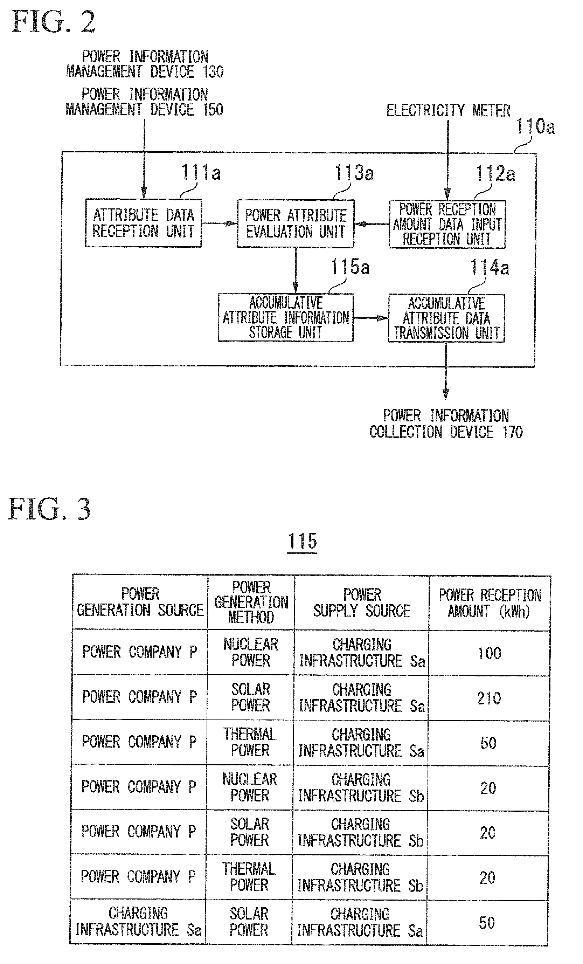

Fig. 2 illustrates an example of a block configuration of the power information management device 110a. The power information management device 110a includes an attribute data reception unit 111a, a power reception amount data input reception unit 112a, a power attribute evaluation unit 113a, an accumulative attribute data transmission unit 114a, and an accumulative attribute information storage unit 115a. Hereinafter, a function and operation of each component will be described.

The power information management devices 110 other than the power information management device 110a include the same components as the components included in the power information management device 110a. In the following description, when the components included in the power information management device 110 are distinguished, the same subscript (a, b, c, ...) as the power information management device 110 including each component is affixed to an end of the component. For example, the attribute data reception unit 111a is a component of the power information management device 110a, the attribute data reception unit 111b is a component of the power information management device 110b, and the attribute data reception unit 111c is a component of the power information management device 110c.

Further, in the following description, a function and operation of a component with no subscript indicate a function and operation of any component with the same reference sign. For example, a function and operation described in the attribute data reception unit 111 indicate a function and operation of the attribute data reception unit 111a, the attribute data reception unit 111 b, the attribute data reception unit 111c, ...

The attribute data reception unit 111 receives attribute data indicating attribute information of the power received by the electric car E in the charging infrastructure S from the power information management device 130 of the charging infrastructure S which is the power supply source. Similarly, the attribute data reception unit 111 receives attribute data indicating attribute information of the power received by the electric car E in the residence R from the power information management device 150 of the residence R which is the power supply source.

The power reception amount data input reception unit 112 receives an input of power reception amount data indicating the power reception amount of the electric car E from the electricity meter of the electric car E.

The power attribute evaluation unit 113 evaluates an attribute of the power received by the electric car E.

The accumulative attribute data transmission unit 114 transmits accumulative attribute data indicating the attribute information of the power stored in the accumulative attribute information storage unit 115 to the power information accumulation device 170.

Fig. 3 illustrates an example of the information stored in the accumulative attribute information storage unit 115 in a table form. Also, respective pieces of the attribute information of a power generation source, a power generation method, a power supply source, and a power reception amount (kWh) are stored in association with one another in the accumulative attribute information storage unit 115.

The power generation source is attribute information indicating a power generation source for the power received by the electric car E. The power generation method is attribute information indicating a method of generating the power received by the electric car E. The power supply source is attribute information indicating a power supply source for the power received by the electric car E. The power reception amount (kWh) is attribute information indicating an accumulation value of an amount of power generated using a generation method indicated by the attribute information "power generation method" in the power generation source indicated by the attribute information "power generation source" and supplied by the power supply source indicated by the attribute information "power supply source."

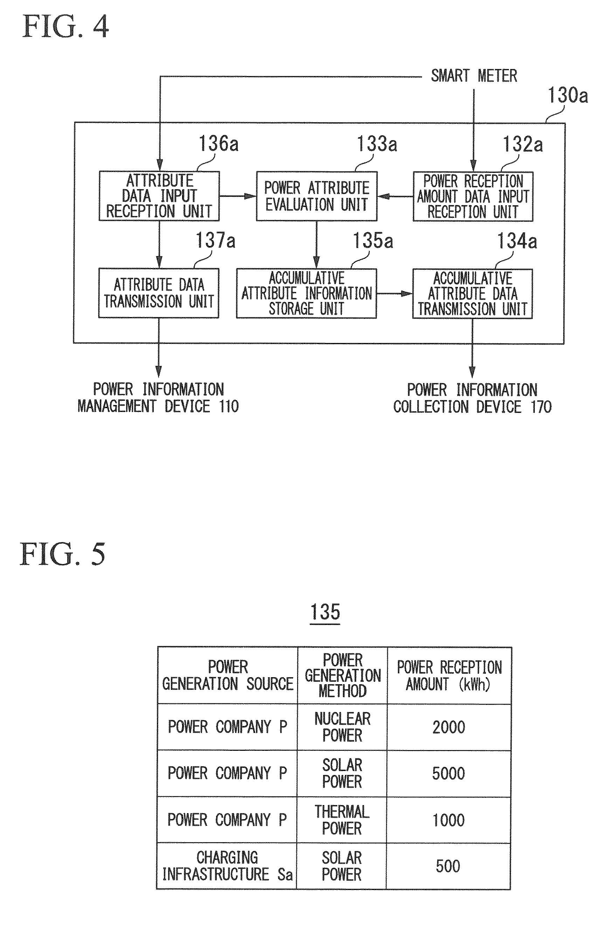

Fig. 4 illustrates an example of a block configuration of the power information management device 130a. The power information management device 130a includes a power reception amount data input reception unit 132a, a power attribute evaluation unit 133a, an accumulative attribute data transmission unit 134a, an accumulative attribute information storage unit 135a, an attribute data input reception unit 136a, and an attribute data transmission unit 137a. Hereinafter, a function and operation of each component will be described.

The power information management devices 130b, 130c, ... other than the power information management device 130a include the same components as the components included in the power information management device 130a. In the following description, when the components included in the power information management device 130 are distinguished, the same subscript (a, b, c, ...) as the power information management device 130 including each component is affixed to an end of the component. For example, the power reception amount data input reception unit 132a is a component of the power information management device 130a, the power reception amount data input reception unit 132b is a component of the power information management device 130b, and the power reception amount data input reception unit 132c is a component of the power information management device 130c.

Further, in the following description, a function and operation of the component with no subscript indicate a function and operation of a component with the same reference sign. For example, a function and operation described in the power reception amount data input reception unit 132 indicate a function and operation of the power reception amount data input reception unit 132a, the power reception amount data input reception unit 132b, and the power reception amount data input reception unit 132c, ...

The power reception amount data input reception unit 132 receives an input of power reception amount data indicating the power reception amount of the charging infrastructure S from the smart meter of the charging infrastructure S.

The power attribute evaluation unit 133 evaluates an attribute of the power received by the charging infrastructure S.

The accumulative attribute data transmission unit 134 transmits accumulative attribute data indicating attribute information of the power stored in the accumulative attribute information storage unit 135 to the power information accumulation device 170.

The attribute data input reception unit 136 receives an input of attribute data indicating attribute information of the power received by the charging infrastructure S from the smart meter of the charging infrastructure S.

The attribute data transmission unit 137 transmits the attribute data indicating attribute information of the power supplied to the electric car E in the charging infrastructure S to the power information management device 110 of the electric car E which is a power supply destination.

Fig. 5 illustrates an example of the information stored in the accumulative attribute information storage unit 135 in a table form. Also, respective pieces of the attribute information of the power generation source, the power generation method, and the power reception amount (kWh) are stored in association with one another in the accumulative attribute information storage unit 135.

The power generation source is attribute information indicating a power generation source of the power received by the charging infrastructure S. The power generation method is attribute information indicating a method of generating the power received by the charging infrastructure S. The power reception amount (kWh) is attribute information indicating an accumulation value of the power reception amount of the power generated using the power generation method indicated by the attribute information "power generation method" in the power generation source indicated by the attribute information "power generation source."

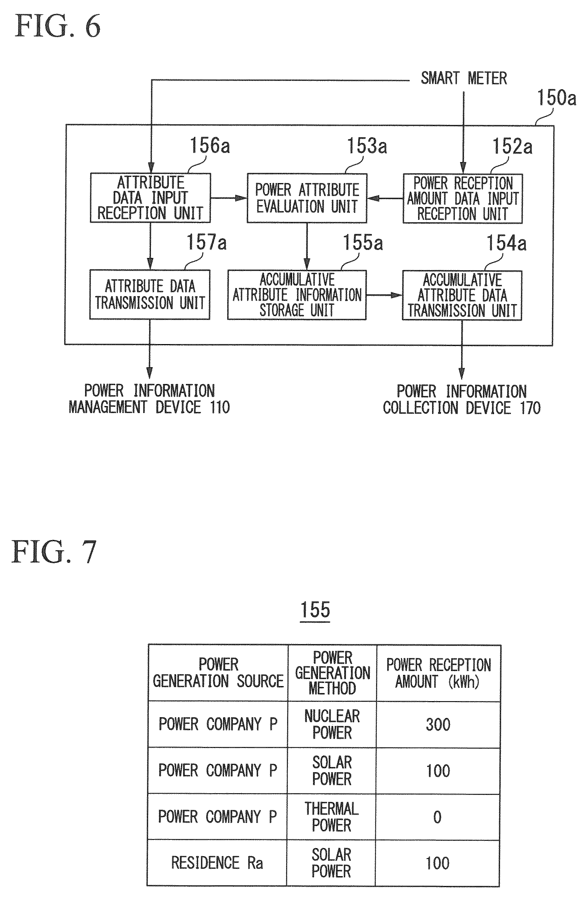

Fig. 6 illustrates an example of a block configuration of the power information management device 150a. The power information management device 150a includes a power reception amount data input reception unit 152a, a power attribute evaluation unit 153a, an accumulative attribute data transmission unit 154a, an accumulative attribute information storage unit 155a, an attribute data input reception unit 156a, and an attribute data transmission unit 157a. Hereinafter, a function and operation of each component will be described.

The power information management devices 150 other than the power information management device 150a include the same components as the components included in the power information management device 150a. In the following description, when the components included in the power information management device 150 are distinguished, the same subscript (a, b, c, ...) as the power information management device 150 including each component is affixed to an end of the component. For example, the power reception amount data input reception unit 152a is a component of the power information management device 150a, the power reception amount data input reception unit 152b is a component of the power information management device 150b, and the power reception amount data input reception unit 152c is a component of the power information management device 150c.

Further, in the following description, a function and operation of the component with no subscript indicate a function and operation of the component with the same reference sign. For example, the function and operation described in the power reception amount data input reception unit 152 indicate the function and operation of the power reception amount data input reception unit 152a, the power reception amount data input reception unit 152b, the power reception amount data input reception unit 152c, ...

The power reception amount data input reception unit 152 receives an input of power reception amount data indicating the power reception amount of the residence R from the smart meter of the residence R.

The power attribute evaluation unit 153 evaluates an attribute of the power received by the residence R.

The accumulative attribute data transmission unit 154 transmits the accumulative attribute data indicating attribute information of power stored in the accumulative attribute information storage unit 155 to the power information accumulation device 170.

The attribute data input reception unit 156 receives an input of attribute data indicating attribute information of the power received by the residence R from the smart meter of the residence R.

The attribute data transmission unit 157 transmits attribute data indicating attribute information of the power supplied to the electric car E in the residence R to the power information management device 110 of the electric car E which is a power supply destination.

Fig. 7 illustrates an example of the information stored in the accumulative attribute information storage unit 155 in a table form. Also, respective pieces of the attribute information of the power generation source, the power generation method, and the power reception amount (kWh) are stored in association with one another in the accumulative attribute information storage unit 155.

The power generation source is attribute information indicating a power generation source for the power received by the residence R. The power generation method is attribute information indicating a method of generating the power received by the residence R. The power reception amount (kWh) is attribute information indicating the accumulation value of the power reception amount of the power generated using a generation method indicated by the attribute information "power generation method" in the power generation source indicated by the attribute information "power generation source."

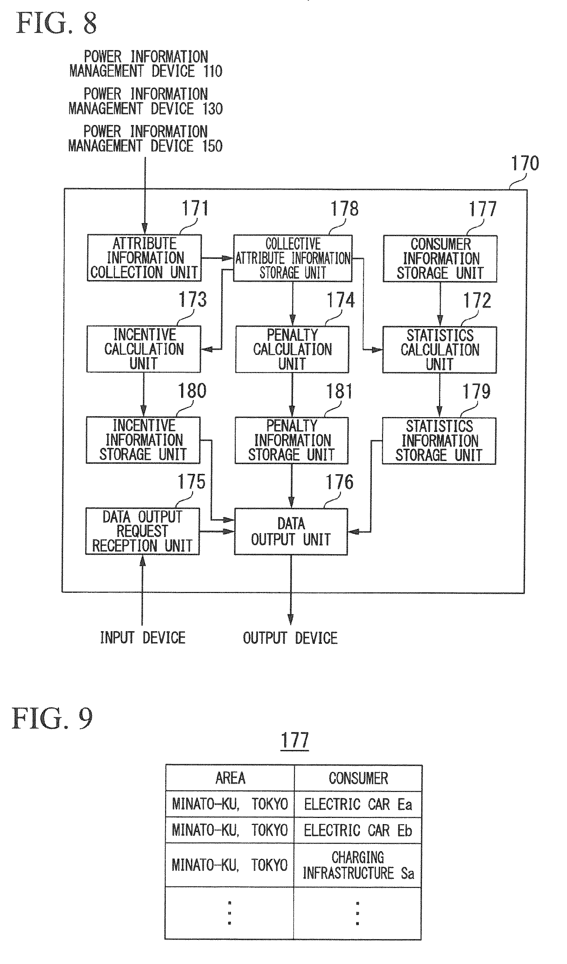

Fig. 8 illustrates an example of a block configuration of the power information accumulation device 170. The power information accumulation device 170 includes an attribute information accumulation unit 171, a statistics calculation unit 172, an incentive calculation unit 173, a penalty calculation unit 174, a data output request reception unit 175, a data output unit 176, a consumer information storage unit 177, an accumulative attribute information storage unit 178, a statistics information storage unit 179, an incentive information storage unit 180, and a penalty information storage unit 181. Hereinafter, a function and operation of each component will be described.

The attribute information accumulation unit 171 accumulates attribute information of the power received by the electric car E, the charging infrastructure S or the residence R.

The statistics calculation unit 172 calculates statistics of the attributes of a plurality of powers received by users of electric cars E, providers of the charging infrastructures S, and residents of the residences R in a predetermined area based on the attribute information accumulated by the attribute information accumulation unit 171.

The incentive calculation unit 173 calculates an incentive to be given to the user of the electric car E, the provider of the charging infrastructure S, or the resident of the residence R based on the attribute information accumulated by the attribute information accumulation unit 171.

The penalty calculation unit 174 calculates a penalty to be given to the user of the electric car E, the provider of the charging infrastructure S, or the resident of the residence R based on the attribute information accumulated by the attribute information accumulation unit 171.

The data output request reception unit 175 receives, from the input device, a request to output data indicating the statistics of the attributes of the plurality of powers received by the users of the electric cars E, the providers of the charging infrastructures S, and the residents of the residences R in the predetermined area. Further, the data output request reception unit 175 receives the request to output data indicating the incentive to be given to the users of the electric cars E, the provider of the charging infrastructure S, and the resident of the residence R from the input device. Further, the data output request reception unit 175 receives the request to output the data indicating the penalty to be given to the users of the electric car E, the provider of the charging infrastructure S, and the resident of the residence R from the input device.

The data output unit 176 outputs the data indicating the statistics of the attributes of the plurality of powers received by the users of the electric cars E, the providers of the charging infrastructures S, and the residents of the residences R in the predetermined area to the output device. Further, the data output unit 176 outputs the data indicating the incentive to be given to the users of the electric cars E, the provider of the charging infrastructure S, and the resident of the residence R to the output device. Further, the data output unit 176 outputs the data indicating the penalty to be given to the user of the electric car E, the provider of the charging infrastructure S, and the resident of the residence R to the output device.

Fig. 9 illustrates an example of the information stored in the consumer information storage unit 177 in a table form.

Respective pieces of information of an area and a consumer are stored in association with one another in the consumer information storage unit 177.

The area is information indicating an area in a certain range. The consumer is information indicating the electric car E, the charging infrastructure S, and the residence R in the area indicated by the information "area."

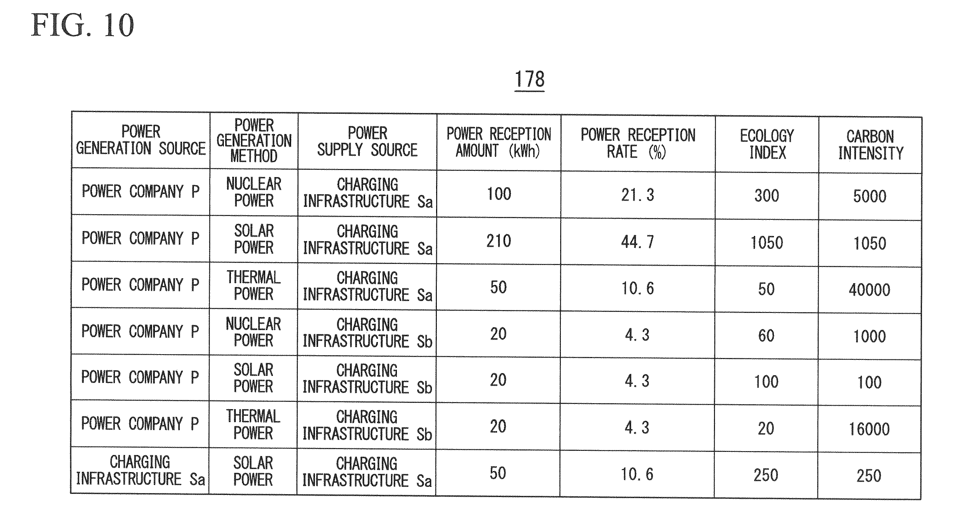

Fig. 10 illustrates an example of the information stored in the accumulative attribute information storage unit 178 in a table form. The information in this example is one example of information accumulated from the power information management device 110 of the electric car E. Respective pieces of attribute information of a power generation source, a power generation method, a power supply source, a power reception amount (kWh), a power reception rate (%), an ecology index, and a carbon intensity are stored in association with one another in this accumulative attribute information storage unit 178 in this example. These pieces of information are individually stored for each electric car E.

The power generation source is attribute information indicating a power generation source for the power received by the electric car E. The power generation method is attribute information indicating a method of generating the power received by the electric car E. The power supply source is attribute information indicating a power supply source for the power received by the electric car E. The power reception amount (kWh) is attribute information indicating an accumulation value of an amount of power generated using the generation method indicated by the attribute information "power generation method" in the power generation source indicated by the attribute information "power generation source" and supplied by the power supply source indicated by the attribute information "power supply source." The power reception rate (%) is attribute information indicating a rate of a power amount indicated by the attribute information "power reception amount (kWh)" in the power amount received by the electric car E. The carbon intensity is attribute information indicating a carbon emission amount when an amount of power indicated by the attribute information "power reception amount (kWh)" has been generated using the power generation method indicated by the attribute information "power generation method." The ecology index is attribute information indicating a degree of a contribution to ecology when the amount of power indicated by the attribute information "power reception amount (kWh)" is generated using the power generation method indicated by the attribute information "power generation method."

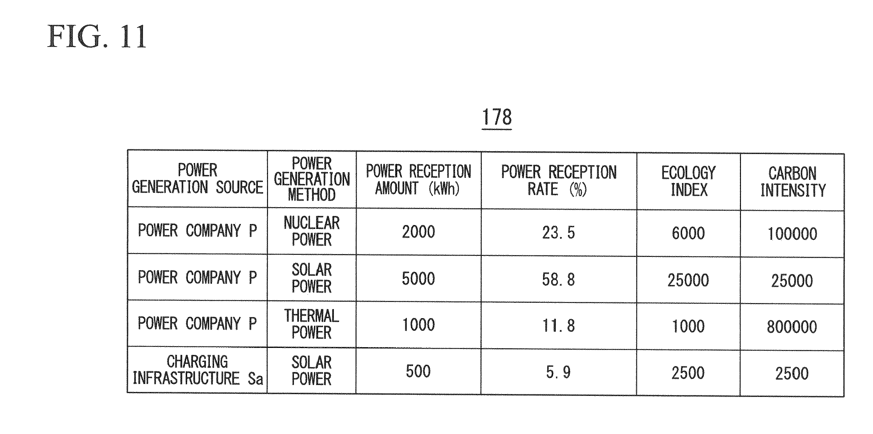

Fig. 11 illustrates another example of the information stored in the accumulative attribute information storage unit 178 in a table form. The information in this example is one example of information accumulated from the power information management device 130 of the charging infrastructure S. Respective pieces of attribute information of a power generation source, a power generation method, a power reception amount (kWh), a power reception rate (%), an ecology index and a carbon intensity are stored in association with one another in this accumulative attribute information storage unit 178 in this example. These pieces of information are individually stored for each charging infrastructure S.

The power generation source is attribute information indicating a power generation source for the power received by the charging infrastructure S. The generation method is attribute information indicating a method of generating the power received by the charging infrastructure S. The power reception amount (kWh) is attribute information indicating an accumulation value of a power reception amount of the power generated using the power generation method indicated by the attribute information "power generation method" in a power generation source indicated by the attribute information "power generation source."

The power reception rate (%) is attribute information indicating a rate of a power amount indicated by the attribute information "power reception amount (kWh)" in the power amount received by the charging infrastructure S. The carbon intensity is attribute information indicating a carbon emission amount when the amount of power indicated by the attribute information "power reception amount (kWh)" is generated using the generation method indicated by the attribute information "power generation method." The ecology index is attribute information indicating a degree of a contribution to ecology when the amount of power indicated by the attribute information "power reception amount (kWh)" is generated using the generation method indicated by the attribute information "power generation method."

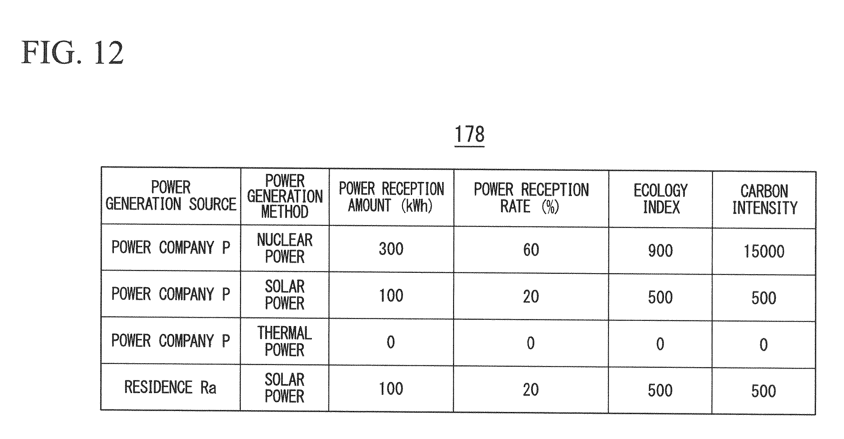

Fig. 12 illustrates yet another example of the information stored in the accumulative attribute information storage unit 178 in a table form. The information in this example is one example of information accumulated from the power information management device 150 of the residence R. Respective pieces of attribute information of a power generation source, a power generation method, a power reception amount (kWh), a power reception rate (%), an ecology index, and a carbon intensity are stored in association with one another in this accumulative attribute information storage unit 178 in this example. These pieces of information are stored individually for each residence R.

The power generation source is attribute information indicating a power generation source for the power received by the residence R. The power generation method is attribute information indicating a method of generating the power received by the residence R. The power reception amount (kWh) is attribute information indicating an accumulation value of the power reception amount of power generated using the generation method indicated by the attribute information "power generation method" in a power generation source indicated by the attribute information "power generation source." The power reception rate (%) is attribute information indicating a rate of a power amount indicated by the attribute information "power reception amount (kWh)" in the power amount received by the residence R. The carbon intensity is attribute information indicating a carbon emission amount when the amount of power indicated by the attribute information "power reception amount (kWh)" is generated using the generation method indicated by the attribute information "power generation method." The ecology index is attribute information indicating a degree of a contribution to ecology when the amount of power indicated by the attribute information "power reception amount (kWh)" is generated using the generation method indicated by the attribute information "power generation method."

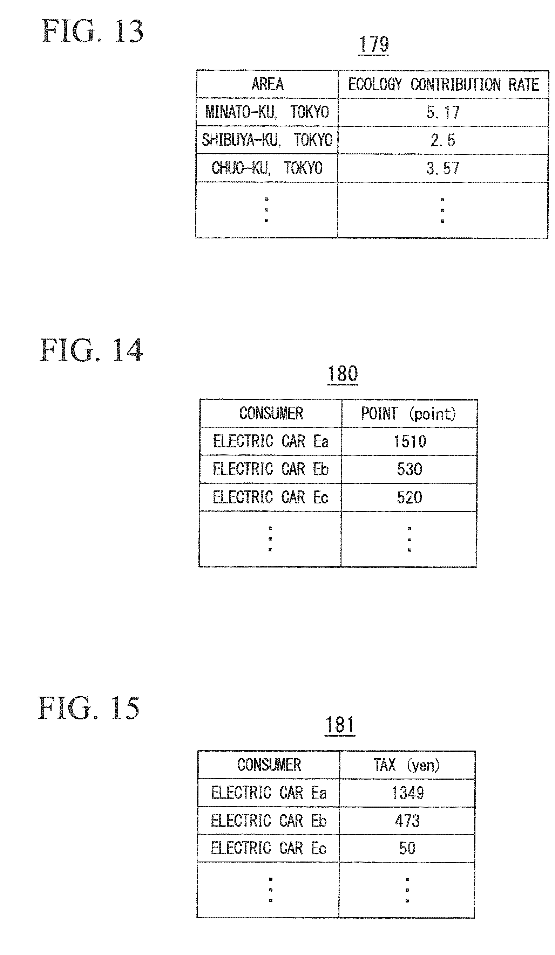

Fig. 13 illustrates an example of information stored in the statistics information storage unit 179 in a table form. Respective pieces of information of an area and an ecology contribution rate are stored in association with each other in the statistics information storage unit 179.

The area is information indicating an area in a certain range. The ecology contribution rate is information indicating a degree of a contribution to the ecology in the area indicated by "area."

Fig. 14 illustrates an example of information stored in the incentive information storage unit 180 in a table form. Respective pieces of information of a consumer and points (points) are stored in association with each other in the incentive information storage unit 180.

The consumer is information indicating the electric car E, the charging infrastructure S, and the residence R. The points (points) are the number of points of a point service given to the consumer indicated by "consumer." Further, the points of the point service may be one example of the "incentive" in the present invention.

Fig. 15 illustrates an example of information stored in the penalty information storage unit 181 in a table form. Respective pieces of information of a consumer and a tax (Japanese yen) are stored in association with each other in the penalty information storage unit 181.

The consumer is information indicating the electric car E, the charging infrastructure S, and the residence R. The tax (Japanese yen) is an amount of money of a tax imposed on the consumer indicated by "consumer." Further, the tax may be one example of "penalty" in the present invention.

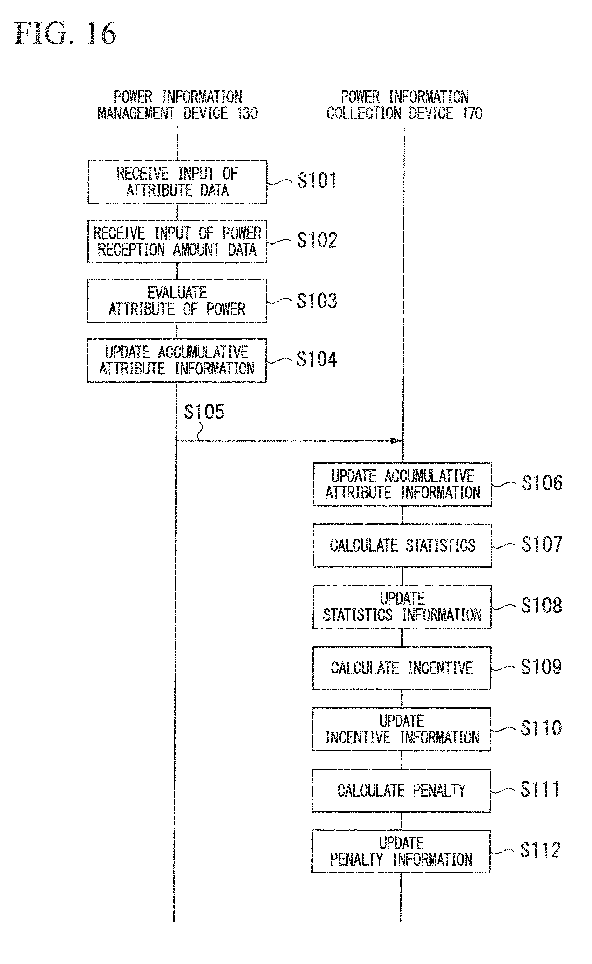

Fig. 16 illustrates an example of an operation sequence of the power information management device 130 and the power information accumulation device 170. This operation sequence shows operation when the charging infrastructure S receives the power. A description of this operation sequence refers to Figs. 1 to 15.

The charging infrastructure S receives power supplied from the power company P or power generated by a solar power system of the charging infrastructure S. For example, the charging infrastructure S individually receives power generated by nuclear power generation, power generated by solar power generation and power generated by thermal power generation, as the power supplied from the power company P. When power begins to be received in the charging infrastructure S, the smart meter of the charging infrastructure S detects an attribute of the power which is being received. Also, the smart meter outputs attribute data indicating attribute information of the power which is being received to the power information management device 130. For example, when the power generated by nuclear power generation, which is supplied from the power company P, is being received, the smart meter outputs attribute data indicating the power generation source "power company P" and the power generation method "nuclear power" to the power information management device 130 as the attribute information of power which is being received.

When the attribute data input reception unit 136 of the power information management device 130 receives an input of the attribute data output from the smart meter (S101), the attribute data input reception unit 136 transmits the attribute data to the power attribute evaluation unit 133.

Meanwhile, the smart meter of the charging infrastructure S measures the power reception amount of the charging infrastructure S. Also, the smart meter outputs power reception amount data indicating a measurement value of the power reception amount to the power information management device 130.

When the power reception amount data input reception unit 132 of the power information management device 130 receives an input of power reception amount data output from the smart meter (S 102), the power reception amount data input reception unit 132 sends the power reception amount data to the power attribute evaluation unit 133.

When the power attribute evaluation unit 133 of the power information management device 130 receives the attribute data sent from the attribute data input reception unit 136 and receives the power reception amount data sent from the power reception amount data input reception unit 132, the power attribute evaluation unit 133 evaluates an attribute of the power received by the charging infrastructure S (S103) and updates the attribute information stored in the accumulative attribute information storage unit 135 (S104). For example, respective pieces of the attribute information of the power generation source "power company P," the power generation method "nuclear power," and the power reception amount "1990 (kWh)" are assumed to be stored in association with one another in the accumulative attribute information storage unit 135. Further, the attribute data is assumed to indicate attribute information of the power generation source "power company P" and the power generation method "nuclear power." Further, the power reception amount data is assumed to indicate that power of 10 (kWh) has been received. In such a case, the power attribute evaluation unit 133 stores the accumulative attribute information of the power reception amount (kWh) after power reception, which is 1990 (kWh)+10 (kWh)=2000 (kWh), in association with the attribute information of the power generation source "power company P" and the power generation method "nuclear power" and updates the information. Thus, the attribute information as illustrated in Fig. 5 is stored in the accumulative attribute information storage unit 135.

When the attribute information stored in the accumulative attribute information storage unit 135 is updated, the accumulative attribute data transmission unit 134 of the power information management device 130 transmits the accumulative attribute data indicating the attribute information stored in the accumulative attribute information storage unit 135 to the power information accumulation device 170 (S105).

When the attribute information accumulation unit 171 of the power information accumulation device 170 receives the accumulative attribute data transmitted from the power information management device 130, the attribute information accumulation unit 171 stores attribute information indicated by the accumulative attribute data in the accumulative attribute information storage unit 178 and updates the information (S106). For example, the attribute information accumulation unit 171 calculates a power reception rate (%), an ecology index and a carbon intensity for each combination of the respective pieces of the attribute information of the power generation source, the power generation method and the power reception amount (kWh) and stores them together upon storing the attribute information in the accumulative attribute information storage unit 178. Thus, the attribute information as illustrated in Fig. 11 is stored in the accumulative attribute information storage unit 178 of the power information accumulation device 170.

When the attribute information stored in the accumulative attribute information storage unit 178 is updated, the statistics calculation unit 172 of the power information accumulation device 170 calculates statistics of the attributes of the plurality of powers received by users of the electric cars E, the providers of the charging infrastructures S, and the residents of the residences R in a predetermined area based on the attribute information accumulated in the accumulative attribute information storage unit 178 (S107). For example, the statistics calculation unit 172 reads the attribute information of the power received by the plurality of consumers in the predetermined area from the attribute information stored in the accumulative attribute information storage unit 178 with reference to the information stored in the consumer information storage unit 177. Also, the statistics calculation unit 172 calculates an ecology contribution rate in the area as statistics based on the read attribute information. Also, the statistics calculation unit 172 stores the statistics information of the calculated ecology contribution rate in the statistics information storage unit 179 (S108). Thus, the information as illustrated in Fig. 13 is stored in the statistics information storage unit 179 of the power information accumulation device 170.

Meanwhile, when the attribute information stored in the accumulative attribute information storage unit 178 is updated, the incentive calculation unit 173 of the power information accumulation device 170 calculates an incentive to be given to the provider of the charging infrastructure S based on the attribute information accumulated in the accumulative attribute information storage unit 178 (S109). For example, the incentive calculation unit 173 calculates the number of points of a point service as the incentive to be given to the provider of the charging infrastructure S. Also, the incentive calculation unit 173 stores information of the calculated incentive in the incentive information storage unit 180 (S110). Thus, the information as illustrated in Fig. 14 is stored in the incentive information storage unit 180 of the power information accumulation device 170.

Meanwhile, when the attribute information stored in the accumulative attribute information storage unit 178 is updated, the penalty calculation unit 174 of the power information accumulation device 170 calculates a penalty to be given to the provider of the charging infrastructure S based on the attribute information accumulated in the accumulative attribute information storage unit 178 (S111). For example, the penalty calculation unit 174 calculates a tax as the penalty to be given to the provider of the charging infrastructure S. Also, the penalty calculation unit 174 stores the information of the calculated penalty in the penalty information storage unit 181 (S 112). Thus, the information as illustrated in Fig. 15 is stored in the penalty information storage unit 181 of the power information accumulation device 170.

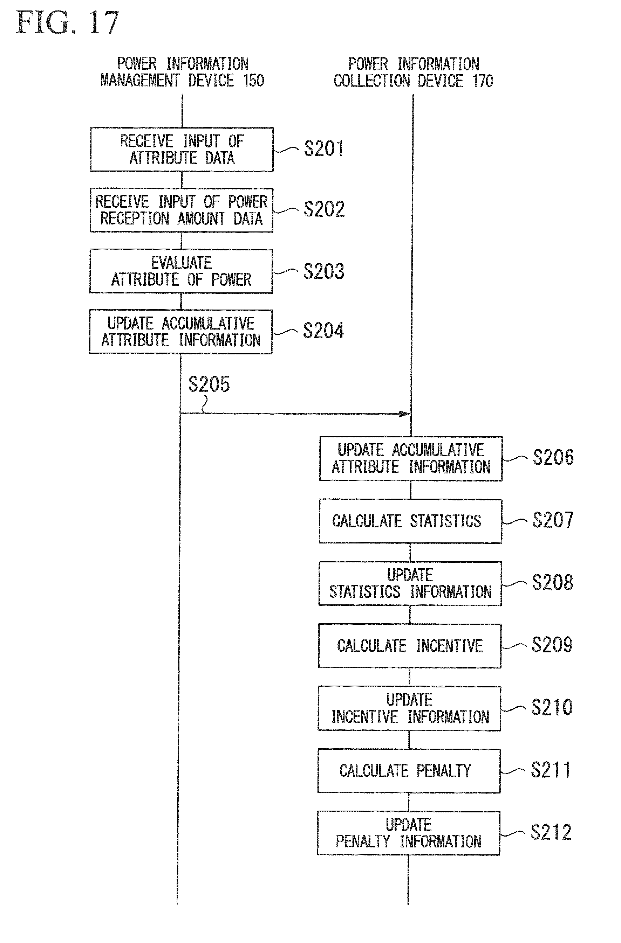

Fig. 17 illustrates an example of an operation sequence of the power information management device 150 and the power information accumulation device 170. This operation sequence indicates operation when the residence R receives power. Further, a description of this operation sequence refers to Figs. 1 to 16.

The residence R receives power supplied from the power company P or power generated by a solar power system of the residence R. For example, the residence R individually receives power generated by nuclear power generation, power generated by solar power generation, and power generated by thermal power generation as the power supplied from the power company P. When power begins to be received in the residence R, the smart meter of the residence R detects attributes of the power which is being received. Also, the smart meter outputs attribute data indicating attribute information of the power which is being received to the power information management device 150. For example, when the power generated by the nuclear power generation, which is supplied from the power company P, is received, the smart meter outputs attribute data indicating the power generation source "power company P" and the power generation method "nuclear power" to the power information management device 150 as the attribute information of power which is being received.

When the attribute data input reception unit 156 of the power information management device 150 receives an input of the attribute data output from the smart meter (S101), the attribute data input reception unit 156 transmits the attribute data to the power attribute evaluation unit 153.

Meanwhile, the smart meter of the residence R measures a power reception amount of the residence R. Also, the smart meter outputs power reception amount data indicating a measurement value of the power reception amount to the power information management device 150.

When the power reception amount data input reception unit 152 of the power information management device 150 receives an input of the power reception amount data output from the smart meter (S202), the power reception amount data input reception unit 152 sends the power reception amount data to the power attribute evaluation unit 153.

When the power attribute evaluation unit 153 of the power information management device 150 receives the attribute data sent from the attribute data input reception unit 156 and receives the power reception amount data sent from the power reception amount data input reception unit 152, the power attribute evaluation unit 153 evaluates an attribute of the power received by the residence R (S203), and updates the attribute information stored in the accumulative attribute information storage unit 155 (S204). For example, respective pieces of the attribute information of the power generation source "power company P," the power generation method "nuclear power" and the power reception amount "290 (kWh)" are assumed to be stored in association with one another in the accumulative attribute information storage unit 155. Further, the attribute data is assumed to indicate the attribute information of the power generation source "power company P" and the power generation method "nuclear power." Further, the power amount data is assumed to indicate that power of 10 (kWh) generated by the nuclear power generation has been received from the power company P. In such a case, the power attribute evaluation unit 153 stores the accumulative attribute information of the power reception amount (kWh) after power reception, which is 290 (kWh)+10 (kWh)=300 (kWh) in association with the attribute information of the power generation source "power company P" and the power generation method "nuclear power" and updates the information. Thus, the attribute information as illustrated in Fig. 7 is stored in the accumulative attribute information storage unit 155.

When the attribute information stored in the accumulative attribute information storage unit 155 is updated, the accumulative attribute data transmission unit 154 of the power information management device 150 transmits accumulative attribute data indicating the attribute information stored in the accumulative attribute information storage unit 155 to the power information accumulation device 170 (S205).

When the attribute information accumulation unit 171 of the power information accumulation device 170 receives the accumulative attribute data transmitted from the power information management device 150, the attribute information accumulation unit 171 stores the attribute information indicated by the accumulative attribute data in the accumulative attribute information storage unit 178 and updates the attribute information (S206). For example, the attribute information accumulation unit 171 calculates a power reception rate (%), an ecology index and a carbon intensity for each combination of respective pieces of the attribute information of the power generation source, the power generation method and the power reception amount (kWh) and stores them together upon storing the attribute information in the accumulative attribute information storage unit 178. Thus, the attribute information as illustrated in Fig. 12 is stored in the accumulative attribute information storage unit 178 of the power information accumulation device 170.

When the attribute information stored in the accumulative attribute information storage unit 178 is updated, the statistics calculation unit 172 of the power information accumulation device 170 calculate statistics of the attributes of the plurality of powers received by the users of the electric cars E, the providers of the charging infrastructures S, and the residents of the residences R in a predetermined area based on the attribute information accumulated in the accumulative attribute information storage unit 178 (S207). For example, the statistics calculation unit 172 reads the attribute information of the power received by the plurality of consumers in the predetermined area from the attribute information stored in the accumulative attribute information storage unit 178 with reference to the information stored in the consumer information storage unit 177. Also, the statistics calculation unit 172 calculates an ecology contribution rate in the area as statistics based on the read attribute information. Also, the statistics calculation unit 172 stores statistics information of the calculated ecology contribution rate in the statistics information storage unit 179 (S208). Thus, the information as illustrated in Fig. 13 is stored in the statistics information storage unit 179 of the power information accumulation device 170.

Meanwhile, when the attribute information stored in the accumulative attribute information storage unit 178 is updated, the incentive calculation unit 173 of the power information accumulation device 170 calculates an incentive to be given to the resident of the residence R based on the attribute information accumulated in the accumulative attribute information storage unit 178 (S209). For example, the incentive calculation unit 173 calculates the number of points of a point service as the incentive to be given to the resident of the residence R. Also, the incentive calculation unit 173 stores information of the calculated incentive in the incentive information storage unit 180 (S210). Thus, the information illustrated in Fig. 14 is stored in the incentive information storage unit 180 of the power information accumulation device 170.

Meanwhile, when the attribute information stored in the accumulative attribute information storage unit 178 is updated, the penalty calculation unit 174 of the power information accumulation device 170 calculates a penalty to be given to the resident of the residence R based on the attribute information accumulated in the accumulative attribute information storage unit 178 (S211). For example, the penalty calculation unit 174 calculates a tax as the penalty to be given to the resident of the residence R. Also, the penalty calculation unit 174 stores information of the calculated penalty in the penalty information storage unit 181 (S212). Thus, the information as illustrated in Fig. 15 is stored in the penalty information storage unit 181 of the power information accumulation device 170.

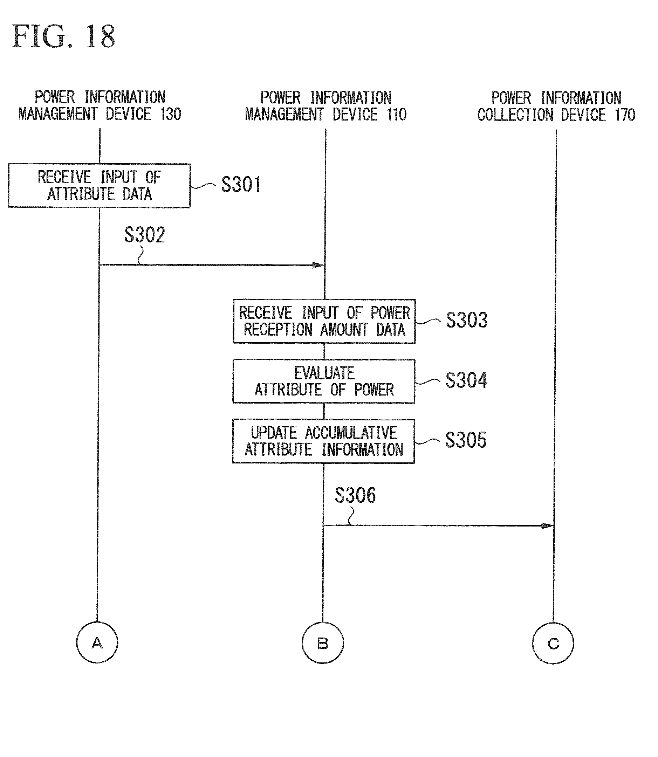

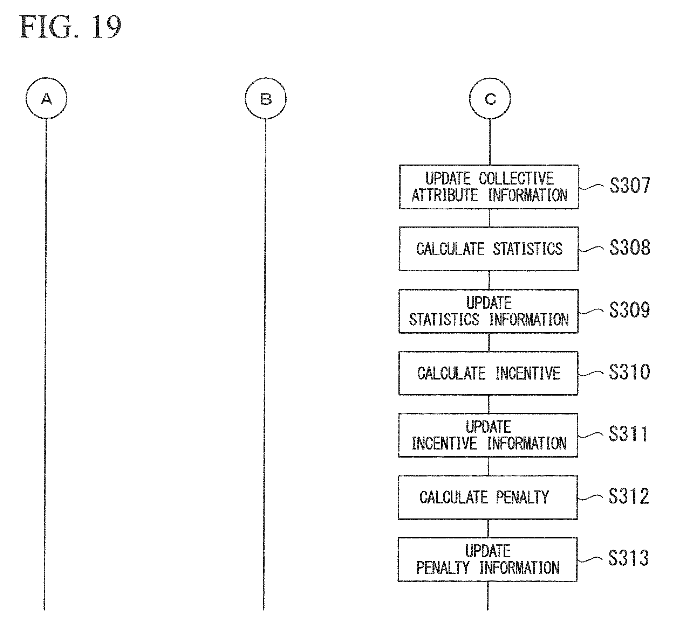

Figs. 18 and 19 illustrate an example of an operation sequence of the power information management device 110, the power information management device 130 and the power information accumulation device 170. This operation sequence indicates an operation when the electric car E is charged in the charging infrastructure S. Further, a description of this operation flow refers to Figs. 1 to 17.

When the user of the electric car E performs charging in the charging infrastructure S, the user selects an attribute of power to be used for charging among power generated by nuclear power generation in the power company P, power generated by solar power generation in the power company P, power generated by thermal power generation in the power company P, and power generated by solar power generation in the charging infrastructure S. In the charging infrastructure S, the power selected by the user of the electric car E is received, and supplied to the electric car E through a charger. When the power begins to be received in the charging infrastructure S, the smart meter of the charging infrastructure S detects an attribute of the power which is being received. Also, the smart meter outputs attribute data indicating attribute information of the power which is being received to the power information management device 130. For example, when the power generated by the nuclear power generation, which is supplied from the power company P, is received, the smart meter outputs attribute data indicating the power generation source "power company P" and the power generation method "nuclear power" to the power information management device 130 as the attribute information of power which is being received.

When the attribute data input reception unit 136 of the power information management device 130 receives an input of attribute data output from the smart meter (S301), the attribute data input reception unit 136 transmits the attribute data to the power attribute evaluation unit 133. Here, when the electric car E is charged, the power information management device 130 establishes a communications link to the power information management device 110 of the electric car E. In that case, the attribute data input reception unit 136 also sends the attribute data to the attribute data transmission unit 137.

Here, the power information management device 130 performs the same process as the process of steps S103 to S105 described above in the operation sequence illustrated in Fig. 16. Also, the power information accumulation device 170 performs the same process as the process of steps S106 to S 112 described above in the operation sequence illustrated in Fig. 16. These processes are not shown in the operation sequences illustrated in Figs. 18 and 19.

When the attribute data transmission unit 137 of the power information management device 130 receives the attribute data sent from the attribute data input reception unit 136, the attribute data transmission unit 137 transmits the attribute data to the power information management device 110 to which the communications link has established (S302). When the attribute data reception unit 111 of the power information management device 110 receives the attribute data transmitted from the power information management device 130, the attribute data reception unit 111 sends the attribute data to the power attribute evaluation unit 113.

Meanwhile, the power reception amount of the electric car E is measured by an electricity meter of the electric car E. Also, the electricity meter outputs power reception amount data indicating the measurement value of the power reception amount.

When the power reception amount data input reception unit 112 of the power information management device 110 receives an input of the power reception amount data output from the electricity meter (S303), the power reception amount data input reception unit 112 sends the power reception amount data to the power attribute evaluation unit 113.

When the power attribute evaluation unit 113 of the power information management device 110 receives the power reception amount data transmitted from the power reception amount data input reception unit 112, the power attribute evaluation unit 113 evaluates an attribute of the power received by the electric car E (S304), and updates the attribute information stored in the accumulative attribute information storage unit 115 (S305). For example, respective pieces of the attribute information of the power generation source "power company P," the power generation method "nuclear power," the power supply source "charging infrastructure Sa" and the power reception amount "90 (kWh)" are stored in association with one another in the accumulative attribute information storage unit 115. Further, the power amount data is assumed to indicate that power of 10 (kWh) generated by nuclear power generation in the power company P has been received from the charging infrastructure Sa. In such a case, the power attribute evaluation unit 113 stores the accumulative attribute information of the power reception amount (kWh) after power reception, which is 90 (kWh)+10 (kWh)=100 (kWh), in association with the attribute information of the power generation source "power company P," the power generation method "nuclear power" and the power supply source "charging infrastructure Sa" and updates the information. Thus, the attribute information as illustrated in Fig. 3 is stored in the accumulative attribute information storage unit 115.

When the attribute information stored in the accumulative attribute information storage unit 115 is updated, the accumulative attribute data transmission unit 114 of the power information management device 110 transmits the accumulative attribute data indicating the attribute information stored in the accumulative attribute information storage unit 115 to the power information accumulation device 170 (S306).

When the attribute information accumulation unit 171 of the power information accumulation device 170 receives the accumulative attribute data transmitted from the power information management device 110, the attribute information accumulation unit 171 stores the attribute information indicated by the accumulative attribute data in the accumulative attribute information storage unit 178 and updates the information (S307). For example, the attribute information accumulation unit 171 calculates a power reception rate (%), an ecology index and a carbon intensity for each combination of respective pieces of the attribute information of the power generation source, the power generation method, the power supply source and the power reception amount (kWh) and stores them together upon storing the attribute information in the accumulative attribute information storage unit 178. Thus, the attribute information as illustrated in Fig. 10 is stored in the accumulative attribute information storage unit 178 of the power information accumulation device 170.

When the attribute information stored in the accumulative attribute information storage unit 178 is updated, the statistics calculation unit 172 of the power information accumulation device 170 calculates the statistics of the attributes of the plurality of powers received by the users of the electric cars E, the providers of the charging infrastructures S, and the residents of the residences R in the predetermined area based on the attribute information accumulated in the accumulative attribute information storage unit 178 (S308). For example, the statistics calculation unit 172 reads the attribute information of the power received by the plurality of consumers in the predetermined area from among the attribute information stored in the accumulative attribute information storage unit 178 with reference to the information stored in the consumer information storage unit 177. Also, the statistics calculation unit 172 calculates an ecology contribution rate in the area as statistics based on the read attribute information. Also, the statistics calculation unit 172 stores the statistics information of the calculated ecology contribution rate in the statistics information storage unit 179 (S309). Thus, the information as illustrated in Fig. 13 is stored in the statistics information storage unit 179 of the power information accumulation device 170.

Meanwhile, when the attribute information stored in the accumulative attribute information storage unit 178 is updated, the incentive calculation unit 173 of the power information accumulation device 170 calculates an incentive to be given to the user of the electric car E based on the attribute information accumulated in the accumulative attribute information storage unit 178 (S310). For example, the incentive calculation unit 173 calculates the number of points of the point service as incentive to be given to the user of the electric car E. Also, the incentive calculation unit 173 stores information of the calculated incentive in the incentive information storage unit 180 (S311). Thus, information as illustrated in Fig. 14 is stored in the incentive information storage unit 180 of the power information accumulation device 170.

Meanwhile, when the attribute information stored in the accumulative attribute information storage unit 178 is updated, the penalty calculation unit 174 of the power information accumulation device 170 calculates a penalty to be given to the user of the electric car E based on the attribute information accumulated in the accumulative attribute information storage unit 178 (S312). For example, the penalty calculation unit 174 calculates a tax as a penalty to be given to the user of the electric car E. Also, the penalty calculation unit 174 stores information of the calculated penalty in the penalty information storage unit 181 (S313). Thus, the information as illustrated in Fig. 15 is stored in the penalty information storage unit 181 of the power information accumulation device 170.

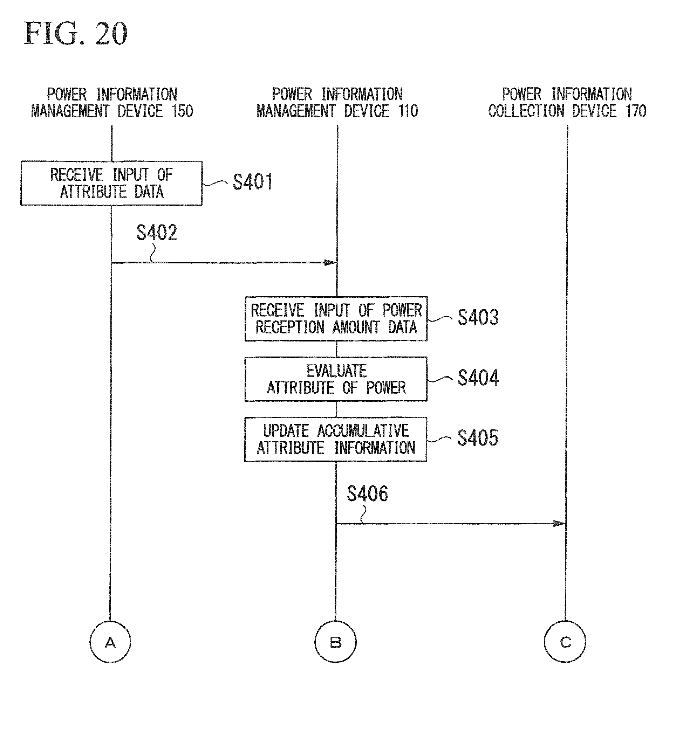

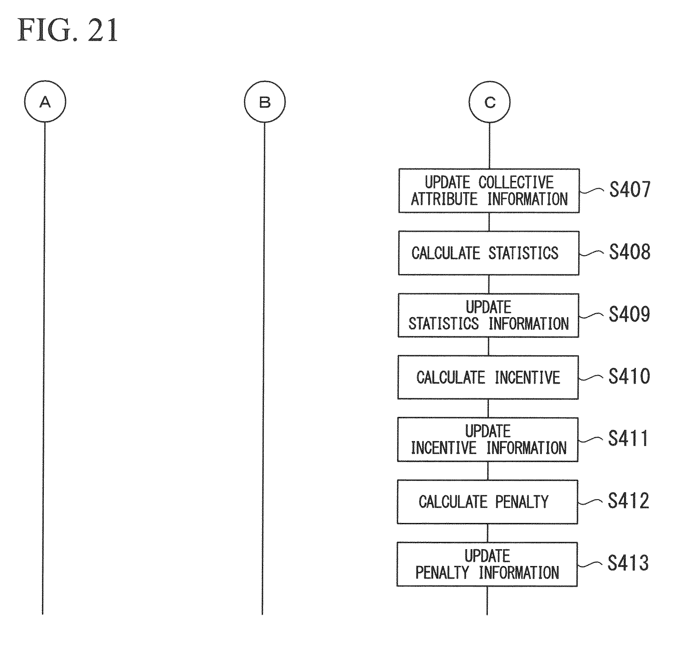

Figs. 20 and 21 illustrate an example of an operation sequence of the power information management device 110, the power information management device 150 and the power information accumulation device 170. This operation sequence indicates an operation when the electric car E is charged in the residence R. Further, a description of this operation flow refers to Figs. 1 to 19.

When the user of the electric car E performs charging in the residence R, the user of the electric car E selects an attribute of power to be received among power generated by nuclear power generation in the power company P, the power generated by solar power generation in the power company P, the power generated by thermal power generation in the power company P, and power generated by solar power generation in the residence R. In the residence R, the power selected by the user of the electric car E is received and supplied to the electric car E through a charger. When the power begins to be received in the residence R, the smart meter of the residence R detects the attribute of the power which is being received. Also, the smart meter outputs attribute data indicating attribute information of the power which is being received to the power information management device 150. For example, when the power generated by the nuclear power generation, which is supplied from the power company P, is being received, the smart meter outputs attribute data indicating the power generation source "power company P" and the power generation method "nuclear power" to the power information management device 150 as the attribute information of the power being received.

When such an input manipulation is performed, the attribute data input reception unit 156 of the power information management device 150 receives an input of the attribute data output from the smart meter (S401), and the attribute data input reception unit 156 sends the attribute data to the power attribute evaluation unit 153. Here, when the electric car E is charged, the power information management device 150 establishes a communications link to the power information management device 110 of the electric car E. In this case, the attribute data input reception unit 156 also sends the attribute data to the attribute data transmission unit 157.

Here, the power information management device 150 performs the same process as the process of steps S203 to S205 described above in the operation sequence illustrated in Fig. 17. Also, the power information accumulation device 170 performs the same process as the process of steps S206 to S212 described above in the operation sequence illustrated in Fig. 17. These processes are not shown in the operation sequences illustrated in Figs. 20 and 21.

When the attribute data transmission unit 157 of the power information management device 150 receives the attribute data sent from the attribute data input reception unit 156, the attribute data transmission unit 157 transmits the attribute data to the power information management device 110 to which the communications link has been established (S402). When the attribute data reception unit 111 of the power information management device 110 receives the attribute data transmitted from the power information management device 150, the attribute data reception unit 111 transmits the attribute data to the power attribute evaluation unit 113.

Since processes of following steps S403 to S413 are the same processes as the processes of steps S303 to S313 in the operation sequence described above with reference to Figs. 18 and 19, a detailed description thereof is omitted. As a result, the information as illustrated in Fig. 13 is stored in the statistics information storage unit 179 of the power information accumulation device 170. Further, the information as illustrated in Fig. 14 is stored in the incentive information storage unit 180 of the power information accumulation device 170. Further, the information as illustrated in Fig. 15 is stored in the penalty information storage unit 181 of the power information accumulation device 170.

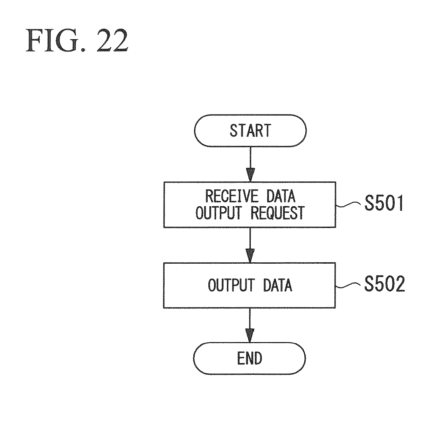

Fig. 22 illustrates an example of an operation flow of the power information accumulation device 170. This operation flow indicates an operation of outputting data indicating statistics information of an ecology contribution rate in each area, information of the incentive to be given to the consumer, and information of the penalty to be given to the consumer. Further, a description of this operation flow refers to Figs. 1 to 21.

When the service provider of the power information management system 100 confirms the statistics information of the ecology contribution rate in each area, the information of the incentive to be given to the consumer, and the information of the penalty to be given to the consumer, the service provider performs a request to output data indicating desired information using an input device.

When such an input manipulation is performed, the data output request reception unit 175 of the power information accumulation device 170 receives a request to output data indicating desired information (S501). Also, the data output request reception unit 175 sends data indicating information for which the output request has been received to the data output unit 176.

When the data output unit 176 of the power information accumulation device 170 receives the data sent from the data output request reception unit 175, the data output unit 176 reads information corresponding to the output request indicated by the data from the statistics information storage unit 179, the incentive information storage unit 180, and the penalty information storage unit 181. For example, in the case of a request to output statistics information of the ecology contribution rate in each area, the data output unit 176 reads the information stored in the statistics information storage unit 179. Further, in the case of a request to output the information of the incentive to be given to consumer, the data output unit 176 reads the information stored in the incentive information storage unit 180. Further, in the case of a request to output of the information of the penalty to be given to consumer, the data output unit 176 reads the information stored in the penalty information storage unit 181. Also, the data output unit 176 outputs data indicating the read information to the output device which outputs the information in a human-recognizable form (S704). Thus, the statistics information of the ecology contribution rate in each area, the information of the incentive to be given to the consumer and the information of the penalty to be given to the consumer can be recognized according to the power information management system 100.

As described above, the power information management system 100 can accumulatively manage the information of the power received by the consumer.

While the present invention has been described above using the embodiments, a technical scope of the present invention is not limited to the scope described in the above embodiment. It is apparent to those skilled in the art that various variations or improvements may be made to the above embodiments. It is apparent from the description of claims that forms to which such variations or improvements have been made can be included within the technical scope of the present invention.

### [Industrial Applicability]

The present invention relates to the power information management system including the power information management device which manages information of power received by the consumer. The power information management device includes the power attribute evaluation unit which evaluates an attribute of the power received by the consumer, and the accumulative attribute information storage unit in which the attribute information of the evaluated power is accumulatively stored each time the power attribute evaluation unit evaluates the attribute of the power.

According to the present invention, it is possible to accumulatively manage the information of the power received by the consumer.

### [Reference Signs List]

- 100: power information management system
- 110: power information management device
- 111: attribute data reception unit
- 112: power reception amount data input reception unit
- 113: power attribute evaluation unit
- 114: accumulative attribute data transmission unit
- 115: accumulative attribute information storage unit
- 130: power information management device
- 132: power reception amount data input reception unit
- 133: power attribute evaluation unit
- 134: accumulative attribute data transmission unit
- 135: accumulative attribute information storage unit
- 136: attribute data input reception unit
- 137: attribute data transmission unit
- 150: power information management device
- 152: power reception amount data input reception unit
- 153: power attribute evaluation unit
- 154: accumulative attribute data transmission unit
- 155: accumulative attribute information storage unit
- 156: attribute data input reception unit
- 157: attribute data transmission unit
- 170: power information accumulation device
- 171: attribute information accumulation unit
- 172: statistics calculation unit
- 173: incentive calculation unit
- 174: penalty calculation unit
- 175: data output request reception unit
- 176: data output unit
- 177: consumer information storage unit
- 178: accumulative attribute information storage unit
- 179: statistics information storage unit
- 180: incentive information storage unit
- 181: penalty information storage unit
- E: electric car
- N: communication line
- P: power company
- R: residence
- S: charging infrastructure

## Claims

1. A power information management system comprising:
a power information management device which manages information of power received by a consumer, wherein
the power information management device comprises:
a power attribute evaluation unit which evaluates an attribute of the power received by the consumer; and
an accumulative attribute information storage unit in which attribute information of the evaluated power is accumulatively stored each time the power attribute evaluation unit evaluates the attribute of the power.

2. The power information management system according to claim 1, further comprising a power information accumulation device which accumulates information of power received by a plurality of consumers,
wherein the power information accumulation device includes:
an attribute information accumulation unit which accumulates attribute information of the power received by the consumers; and
a statistics calculation unit which calculates statistics of attributes of power received by a plurality of consumers in a predetermined area based on the attribute information accumulated by the attribute information accumulation unit.

3. The power information management system according to claim 2, wherein the power information accumulation device further includes an incentive calculation unit which calculates an incentive to be given to the consumer based on the attribute information accumulated by the attribute information accumulation unit.

4. The power information management system according to claim 2 or 3, wherein the power information accumulation device further includes a penalty calculation unit which calculates a penalty to be given to the consumer based on the attribute information accumulated by the attribute information accumulation unit.

5. A power information management device which manages information of power received by a consumer, the power information management device comprising:
a power attribute evaluation unit which evaluates an attribute of the power received by the consumer; and
an accumulative attribute information storage unit in which attribute information of the evaluated power is accumulatively stored each time the power attribute evaluation unit evaluates the attribute of the power.

6. A program for a power information management device which manages information of power received by a consumer, the program causing the power information management device to function as:
a power attribute evaluation unit which evaluates an attribute of the power received by the consumer; and
an accumulative attribute information storage unit in which attribute information of the evaluated power is accumulatively stored each time the power attribute evaluation unit evaluates the attribute of the power.
